# EUROPÄISCHE PATENTSCHRIFT

(11) **EP 2 368 210 B1**
(45) Veröffentlichungstag und Bekanntmachung des Hinweises auf die Patenterteilung: **26.12.2012**
(21) Anmeldenummer: 09752742.8
(22) Anmeldetag: 05.11.2009
(51) Int. Cl.: G06K 7/00, G01S 13/75, H01Q 3/26, G06K 7/10

(54) **VERFAHREN ZUR ANSTEUERUNG EINER RFID-ANTENNE SOWIE EIN ZUGEHÖRIGES RFID-ANTENNEN-SYSTEM**
METHOD FOR ACTUATING AN RFID ANTENNA, AND AN ASSOCIATED RFID ANTENNA SYSTEM
PROCÉDÉ DE COMMANDE D UNE ANTENNE RFID ET SYSTÈME D ANTENNE RFID ASSOCIÉ

(30) Priorität: 18.12.2008 DE 102008063787
(43) Veröffentlichungstag der Anmeldung: 28.09.2011
(73) Patentinhaber: Kathrein-Werke KG, 83022 Rosenheim (DE)
(72) Erfinder: LANKES, Thomas, 83026 Rosenheim (DE); MIERKE, Frank, 81667 München (DE); SCHILLMEIER, Gerald, 81371 München (DE)
(74) Vertreter: Flach, Dieter Rolf Paul
(86) Internationale Anmeldenummer: PCT/EP2009/007933
(87) Internationale Veröffentlichungsnummer: WO 2010/069433

(56) Entgegenhaltungen:
- EP-A1- 1 845 631
- DE-U1-202006 017 474
- US-A1- 2007 096 919

## Beschreibung

Die Erfindung betrifft ein Verfahren zur Ansteuerung einer RFID-Antenne sowie ein zugehöriges RFID-Antennen-System nach dem Oberbegriff des nebengeordneten Anspruchs.

Ein RFID-Antennen-System ist beispielsweise aus der DE 10 2007 018 059 bekannt geworden.

RFID-Verfahren zur kontaktlosen Identifikation von auf sogenannten RFID-Tags gespeicherten Informationen mittels magnetischer, elektrischer und/oder elektromagnetischer Energie- und Datenübertragung sind hinlänglich bekannt. Bei dem RFID-Verfahren (Radiofrequenz-Identifizierung) handelt es sich um eine Möglichkeit, auf tragbaren Datenträgern befindliche Informationen kontaktlos auszulesen und/oder Informationen auf dem tragbaren Datenträger zu schreiben. Zum Einsatz kommen sogenannte passive RFID-Tags, die ihre Energie immer aus dem elektrischen, magnetischen und/oder elektromagnetischen Feld einer Antenne erhalten, oder sogenannte aktive RFID-Tags, die mit einer eigenen (aufladbaren) Energieversorgung versehen sind. Allgemein handelt es sich bei den RFID-Tags um sogenannte Transponder.

Die in Rede stehenden RFID-Tags können für die unterschiedlichsten Einsatzzwecke verwendet werden, nämlich zur Erfassung (Detektion, Identifikation) von Gegenständen und /oder Produkten unterschiedlichster Art, beispielsweise zur Identifikation und Erfassung von Kleidungsstücken, beispielsweise T-Shirts etc.

Bekanntermaßen werden RFID-Tags und die zugehörigen Identifikationsverfahren so aufgebaut und umgesetzt, dass ein Schreib- und/oder Lesegerät (ein sogenannter Reader) vorgesehen ist. Der Reader ist an einer Antenne angeschlossen, worüber die entsprechenden Abfragesignale ausgesandt bzw. die entsprechenden Informations-Antworten von Tags erhalten werden können. Beim RFID-Verfahren wird dabei häufig auf der gleichen Frequenz ausgesendet und empfangen (es kann allerdings auch auf unterschiedlichen Frequenzen gesendet und empfangen werden). Das von der Antenne des Schreib- und/oder Lesegerätes ausgesandte Signal kann gleichzeitig zur Energieversorgung der Tags dienen. Die entsprechenden Informationen werden aus dem Tag ausgelesen und an das Sende- und/oder Empfangsgerät zurückgesandt, das über eine zugeordnete Antenne das entsprechende Signal auffangen und auswerten kann. Es handelt sich also um einen bidirektionalen Sende-Empfangsweg in einem gleichen Frequenzbereich oder Frequenzband. Dazu sind in den unterschiedlichen Ländern gegebenenfalls unterschiedliche Frequenzbänder für diese Technik freigegeben.

Grundsätzlich besteht bei RFID-Systemen das Problem, alle in einem Antennen-Bereich befindlichen Tags vollständig und richtig auszulesen. Problematisch ist dabei insbesondere, dass eventuell eine Vielzahl von Produkten, die mit Tags versehen sind, auf engem Raum hintereinander und/oder nebeneinander zu liegen kommen, so dass unter Umständen bestimmte Tags nicht richtig oder nicht vollständig oder überhaupt nicht ausgelesen werden können.

Dabei ist bekannt, dass die Leserate durch Verstärkung des Antennensignals verbessert werden kann. Allerdings bestehen normative Beschränkungen der Reader-Sendeleistungen. Da diese normative Beschränkung der Reader-Sendeleistung jedoch auf die linearen Feldkomponenten der Antenne bezogen sind, werden bevorzugt zirkular polarisierte Antennen für die Reader eingesetzt, um Tags trotz ihrer überwiegend linearen Polarisation in verschiedenen Ausrichtungen besser ansprechen zu können und um die zirkular polarisierte Antenne letztlich mit höherer Gesamtleistung (beispielsweise maximal 3 dB) betreiben zu können, verglichen mit einer linear polarisierten RFID-Antenne. Aufgrund der undefinierten Umgebung und Tag-Anordnung kann allerdings das Ansprechen der Tags richtungsabhängig stark beeinflusst werden.

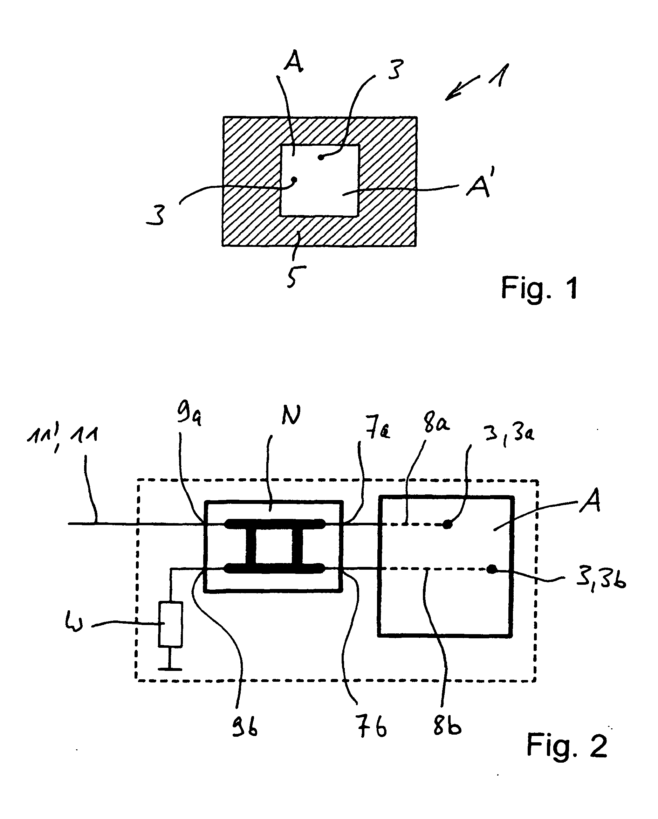

Üblicherweise werden als Reader-Antenne überwiegend zirkular polarisierte Antennen eingesetzt. In Figur 1 ist in schematischer Draufsicht eine derartige Antennenanordnung 1 in Form einer Patch-Antenne A gezeigt, die beispielsweise zwei um 90° versetzt zueinander angeordnete Speisepunkte 3 aufweist, die also vorzugsweise zu einer durch die quadratische Patch-Antenne A' mit ihrer elektrisch leitfähigen Patch-Strahlungsfläche verlaufenden Diagonale symmetrisch angeordnet sind. Durch einen derartigen Aufbau kann letztlich eine zirkular polarisierte elektromagnetische Welle erzeugt werden. Die nach dem Stand der Technik bekannte und in Figur 1 gezeigte Antenne 1 sitzt dabei beispielsweise auf einem Substrat, z.B. in Form einer Leiterplatine 5. Die Zirkularität der über die Patch-Antenne erzeugten elektromagnetischen Welle wird dabei zumindest durch die erwähnten beiden Speisepunkte 3 für die beiden orthogonalen linearen Polarisationen erreicht. Die dabei erforderliche Leistungsaufteilung von ca. 50:50 sowie der Phasenunterschied von 90° können durch ein entsprechendes Netzwerk N z.B. einen π/2-Hybrid erzielt werden, wie dies in Figur 2 schematisch dargestellt ist. Der dort gezeigte π/2-Hybrid weist zwei Antennen-Ports 7a und 7b auf, wobei eine elektrische Verbindung 8a und 8b zu den beiden Speisepunkten 3a und 3b herstellbar ist. Gemäß der nach dem Stand der Technik bekannten Grundschaltung nach Figur 2 wird dabei das Antennen-Netzwerk N über einen Eingangs-Port 9a angesteuert. Und zwar über eine Speiseleitung 11 vorzugsweise in Form einer Koaxleitung 11', die mit einem Reader R verbunden ist. Der zweite Eingangs-Port 9b, also insgesamt der vierte Port des beschriebenen Hybrides, wird üblicherweise mit dem Wellenwiderstand W der Leitung abgeschlossen.

Ein derartiger Stand der Technik ist beispielsweise aus der US 2007/0096919 A1 als bekannt zu entnehmen.

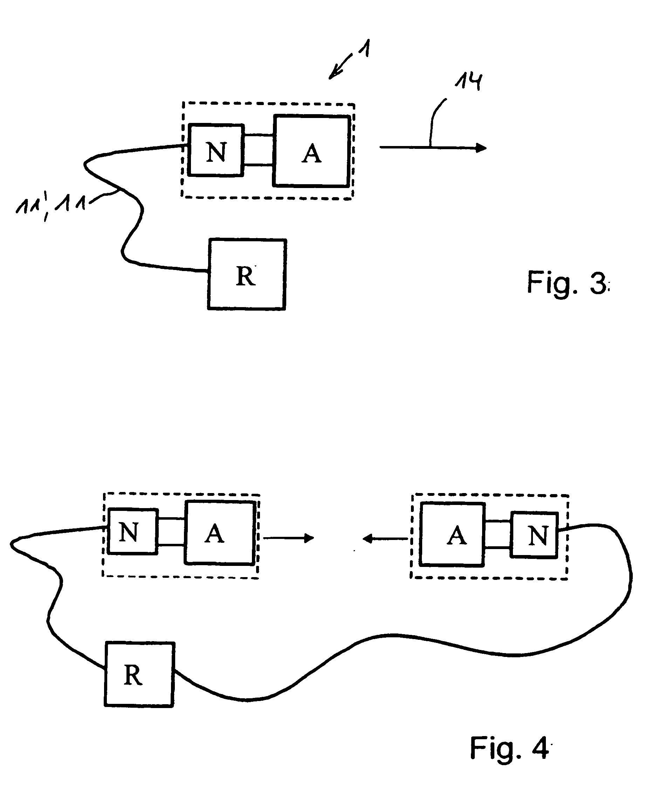

Durch eine derartige Antenne kann entweder eine linkszirkular polarisierte elektromagnetische Welle oder rechtszirkular polarisierte Welle erzeugt und gemäß symbolisch wiedergegebener Abstrahlrichtung 14 (Figur 3) abgestrahlt werden. Keine der beiden Polarisationen bietet in der Praxis einen Vorzug gegenüber der anderen Polarisation. Eine links- oder rechtszirkular polarisierte Welle wird je nachdem dadurch erzeugt, dass die vom Reader R kommende Speiseleitung 11 entweder mit dem einen oder dem anderen Eingangs-Port 9a bzw. 9b verbunden und der jeweils andere Eingangs-Port mit dem erwähnten Wellenwiderstand abgeschlossen ist. In der Regel wird ein derartiger Reader R mit dem entsprechenden Antennen-Netzwerk N und der Reader-Antenne A wie in Figur 3 dargestellt verwendet, insbesondere in der Automatisierungstechnik. Daneben kann der Reader R aber auch mit zwei oder noch mehr räumlich getrennten Antennen A betrieben werden, um zum Beispiel einen größeren vorgegebenen Bereich zu überwachen. Dabei schaltet der Reader nacheinander zwischen den beiden gleich polarisierten, räumlich getrennten Antennen A um, wie dies schematisch in Figur 4 dargestellt ist.

Grundsätzlich ist aber auch ein entsprechendes RFID-Antennen-System aus der EP 1 845 631 A1 als bekannt zu entnehmen. Dieses Antennensystem ist als nächster Stand der Technik zu betrachten und umfasst eine vom Reader ausgehende und zum Antennen-Netzwerk führende Sendeleitung. Das Netzwerk ist dabei so aufgebaut, dass es eine Schaltungsanordnung zum einen und zwei nachgeschaltete Hybridkreise umfasst, über die zum einen eine erste Polarisation und zum anderen eine dazu senkrechte zweite Polarisation erzeugt werden kann, um die Antenne als linkspolarisierte oder rechtspolarisierte Antenne betreiben zu können.

Über eine zusätzliche separate Steuerleitung können der Steuerungs-Logik als Teil des Antennen-Netzwerkes die Steuersignale zugeführt werden, um darüber die Polarisationsumschaltung zur Erzeugung einer zirkularpolarisierten elektromagnetischenwelle an der Antenne zu ermöglichen.

Der hierfür notwendige Aufwand ist allerdings nicht zu unterschätzen.

Aufgabe der vorliegenden Erfindung ist es demgegenüber, ausgehend von einem derartigen grundsätzlich nach dem Stand der Technik bekannten System ein verbessertes Verfahren sowie eine verbesserte Vorrichtung zur kontaktlosen Übertragung von Daten von und/oder zu einer Vielzahl von Daten- und/oder Informationsträgern vorzugsweise in Form von RFID-Tags zu schaffen.

Die Aufgabe wird bezüglich des Verfahrens entsprechend den in Anspruch 1 und bezüglich des RFID-Antennen-Systems bezüglich den im Anspruch 10 angegebenen Merkmalen gelöst. Vorteilhafte Ausgestaltungen der Erfindung sind in den Unteransprüchen angegeben.

Es muss als ausgesprochen überraschend bezeichnet werden, dass ohne großen technischen Aufwand gegenüber herkömmlichen Verfahren und RFID-Antennen-Systemen eine deutliche Verbesserung erzielbar ist. Überraschend ist dabei auch, dass durch die erfindungsgemäße Lösung weder der technische Aufwand überproportional ansteigt, noch erforderliche Komponenten einen zusätzlichen Bauraum benötigen.

Erfindungsgemäß ist nämlich eine Polarisations-Umschaltung vorgesehen, die die betreffende Reader-Antenne so ansteuert und/oder betreibt, dass die Reader-Antenne wechselweise unter Erzeugung einer links- sowie einer rechtszirkular polarisierten elektromagnetischen Welle abstrahlt. Durch den Wechsel der Polarisationsrichtung wird eine verbesserte Tag-Erkennung realisiert. Dabei können unabhängig von der Tag-Polarisation unterschiedlichste, d.h. verschiedenste Tagformen eingesetzt werden. Die Erfindung ist dabei vor allem auch von der im jeweiligen Einsatzbereich vorherrschenden Umgebung unabhängig.

Die erfindungsgemäße Lösung zeichnet sich vor allem durch die Einfachheit ihrer Konstruktion und Umsetzung aus. Denn im Stand der Technik ist bisher nur vorgesehen, dass eine zirkularpolarisierte elektromagnetische Welle durch die Antenne erzeugt wird, entweder nur rechts- oder linkszirkulierend, also nicht wechselweise sich ändernd, oder aber es ist eine vergleichweise aufwändige Polarisations-Umschaltungs-Einrichtung vorgesehen, beispielsweise in der EP 1 845 631 A1.

In einer bevorzugten Ausführungsform der Erfindung wird dabei ein der RFID-Antenne vorgeschaltetes Antennen-Netzwerk verwendet, bei welchem die vom Reader kommenden Sendesignale wechselweise einmal auf dem einen Eingangs-Port und dann auf dem anderen Eingangs-Port eingespeist werden, worüber wechselweise eine linkshändige und dann eine rechtshändige zirkular polarisierte elektromagnetische Welle und umgekehrt erzeugt werden kann. Bevorzugt wird dabei der jeweils andere Eingangs-Port, also der vom Antennennetzwerk aus gesehen nicht aktive Eingang oder Port des Antennennetzes, reflexionsfrei abgeschlossen. Bevorzugt wird eine Patch-Antenne verwendet, die zwei Einspeisepunkte aufweist, die wechselweise über das Antennen-Netzwerk angesteuert werden, um die wechselweise links- und rechtszirkular polarisierte elektromagnetische Welle zu erzeugen. Hierbei wird jeweils ca. 50% der Energie am einen bzw. am anderen Einspeisepunkt eingespeist. Ebenso wäre beispielsweise die Verwendung einer Patch-Antenne mit vier um 90° versetzt liegenden Speisepunkten denkbar, wobei an jedem einzelnen Speisepunkt dann bevorzugt ca. 25% der Sendeleistung eingespeist wird.

Aus der erläuterten Schilderung ergibt sich, dass der betreffende Reader beispielsweise über zwei Speiseleitungen bevorzugt in Form von zwei Koaxleitungen mit den beiden Antennen-Netzwerk-Port-Eingängen verbunden ist, um dabei wechselweise das Sendesignal an den einen bzw. an den anderen Eingangs-Port zu übermitteln und eine links- bzw. eine rechtszirkular Polarisation an der Reader-Antenne zu erzeugen. Der Reader muss dabei erfindungsgemäß so ausgeführt werden, dass der jeweils nicht aktive Reader-ausgang von der angeschlossenen Koaxialleitung aus gesehen reflexionsarm bzw. bevorzugt reflexionsfrei abgeschlossen ist. Möglich ist aber auch, dass das Antennen-Netzwerk um ein weiteres Umschalt-Netzwerk ergänzt wird, welches lediglich über eine einzige Verbindungsleitung vorzugsweise ebenfalls wieder in Form eines Koaxialkabels mit dem Reader verbunden ist. Das Umschalt-Netzwerk schaltet dabei durch den Reader gesteuert z.B. über eine dem Nutzsignal überlagerte Zwischenfrequenz oder eine Gleichspannung etc, die Eingänge des Antennen-Netzwerkes zum Reader durch. Gleichzeitig wird der jeweils nicht durchgeschaltete Eingang wie auch oben reflexionsfrei abgeschlossen. In diesem Fall wird an die Impedanz des jeweils nicht aktiven Readerausgangs - sofern mehrere vorhanden sind - keine spezielle Anforderung gestellt.

Das erwähnte Antennen-Netzwerk und die Reader-Antenne sind bevorzugt als Einheit aufgebaut. Das vorstehend erwähnte Umschalt-Netzwerk kann davon getrennt oder als gemeinsame Baueinheit mit dem Netzwerk und/oder der Reader-Antenne ausgeführt sein. Bei Bedarf kann sogar der Reader selbst mit dem Netzwerk und gegebenenfalls dem Umschalt-Netzwerk und der Reader-Antenne als gemeinsame Baueinheit aufgebaut sein.

Die Erfindung wird nachfolgend anhand von Zeichnungen weiter erläutert. Dabei zeigen im einzelnen
- Figur 1:: eine schematische Draufsicht auf eine nach dem Stand der Technik bekannte Patch-Antennemit zwei Einspeisepunkten;
- Figur 2:: eine nach dem Stand der Technik bekannte Schaltungsanordnung mit einer Reader-Antenne,die über ein Antennen-Netzwerk in Form eines π/2-Hybrides zur Erzeugung einerzirkular polarisierten elektromagnetischenWelle angesteuert wird;
- Figur 3:: eine entsprechende Ansteuerung der in Figur2 dargestellten Schaltungsanordnung, ausgehend von einem Reader über eine Koaxialleitung,nach dem Stand der Technik;
- Figur 4:: eine zu Figur 3 erweiterte Schaltungsanordnungnach dem Stand der Technik, bei der vom einen Reader aus zwei Reader-Antennenmit dem jeweils vorgeschalteten Antennen-Netzwerk angesteuert werden;
- Figur 5:: eine erfindungsgemäße Schaltungsanordnung einer Reader-Antenne mit einem vorgeschaltetenAntennen-Netzwerk;
- Figur 6:: ein erfindungsgemäßes RFID-Antennen-System;
- Figur 7:: ein zu Figur 6 abgewandeltes Ausführungsbeispiel,bei welchem die Reader-Antenne, ein Netzwerk und der Reader selbst als gemeinsame Baueinheit ausgebildet sind;
- Figur 8:: ein zu Figur 6 nochmals abgewandeltes erfindungsgemäßesAusführungsbeispiel; und
- Figur 9:: ein zu Figur.6 nochmals abgewandeltes Ausführungsbeispielmit einer Antenne in Form einer Patch-Antenne, die über vier Speisepunktegespeist wird.

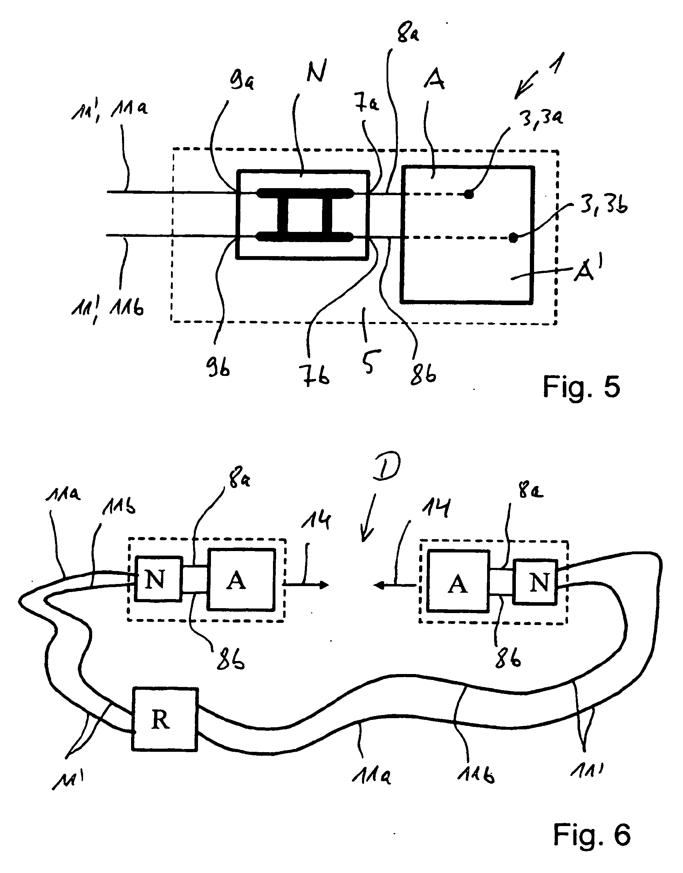

Nachfolgend wird auf die Figuren 5 und 6 Bezug genommen, in denen ein erstes Ausführungsbeispiel der Erfindung gezeigt wird.

Erfindungsgemäß weist die Antennenanordnung 1 wiederum eine Antenne A in Form einer Patch-Antenne A' mit zwei Speisepunkten 3, d.h. 3a und 3b auf. Die Antennenanordnung 1 umfasst neben der Antenne A zudem ein anhand von Figur 1 und 2 erläutertes n/2-Netzwerk N, welches über die beiden Ausgänge 7a, 7b und die Verbindungsleitungen 8a, 8b mit den beiden Speisepunkten 3 in Verbindung steht und hierüber die Patch-Antenne A' speist, so dass also die Sendesignale vom Reader R kommend so in die Antenne A eingespeist werden und die von den Tags ausgestrahlten Signale empfangen und zum Reader R rückübermittelt werden können.

Das n/2-Netzwerk N weist die erwähnten beiden eingangs- oder readerseiteigen Ports 9a und 9b auf, wobei nunmehr in Abweichung zum Stand der Technik zwei Übertragungs- oder Speiseleitungen 11a und 11b vorgesehen sind, die zum Reader R führen. Es handelt sich bevorzugt in beiden Fällen um koaxiale Speiseleitungen 11'.

Durch diesen Aufbau ist es nunmehr möglich, dass vom Reader R zeitgetaktet oder unmittelbar aufeinander folgend wechselweise einmal eine Anspeisung der Patch-Antenne 1 über die eine Speiseleitung 11a erfolgt, wobei im Reader der jeweils andere Port 9b, also der jeweils nicht aktive Reader-Ausgang vom Antennen-Netzwerk aus gesehen reflexionsfrei abgeschlossen wird. Dies kann beispielsweise durch einen (wie anhand von Figur 2 gezeigten) zur Masse geschalteten Widerstand W erfolgen, so dass die Leitung üblicherweise mit dem Wellenwiderstand der Leitung terminiert ist.

Beispielsweise in einem Zeitmultiplex-Verfahren wird dann vom Reader die Einspeisung wechselweise so umgeschaltet, dass das Einspeisesignal nicht mehr über den ersten Port 9a, sondern über den zweiten Port 9b, dem Netzwerk N und damit der Patch-Antenne 1 zugeführt und in diesem Fall dann die erste Leitung 9a bevorzugt entsprechend dem Wellenwiderstand der Leitung abgeschlossen wird.

Bei Speisung des ersten Anschlusses 9a wird dabei beispielsweise ein linkshändige zirkular polarisierte Welle von der Antenne abgestrahlt, wohingegen bei Speisung am zweiten Anschluss 9b eine rechtshändig zirkulare Polarisation erzeugt und abgestrahlt wird. Die Zeitphasen für die Umschaltung kann dabei in weiten Grenzen beliebig gewählt und angepasst werden. Eine Umschaltung beispielsweise in Zeitschritten von ca. 8 ms. Die Umschaltzeiten können aber bei hoher Kommunikationsrate auch deutlich länger sein. Zudem können Pausezeiten je nach den jeweiligen Umschalte- oder Sendezyklen grundsätzlich vorgesehen sein.

Bei einem derartigen Aufbau mit einem Reader, von dem zwei Speiseleitungen ausgehen, kann beispielsweise eine Antennenanordnung 1 wechselweise so betrieben werden, dass aufeinander folgend in einem vorwählbaren zeitlichen Abstand abwechselnd links zirkular polarisierte und dann rechts zirkular polarisierte elektromagnetische Wellen erzeugt und abgestrahlt werden, also allgemein die betreffende Antenne A und insbesondere die Patch-Antenne A' wechselweise als linkshändig zirkular polarisierte Antenne und dann als rechtshändig **zirkular** polarisierte Antenne betrieben wird. Bei dem Ausführungsbeispiel gemäß Figur 6 ist beispielsweise angedeutet, dass über einen Reader jeweils zwei Paare von Speiseleitung 11, 11' zu zwei Antennen A ausgehen, und zwar jeweils über das erwähnte Netzwerk N. Eine Anordnung gemäß Figur 6 eignet sich insbesondere zur Überwachung eines Durchgangsbereiches D, der zwischen den beiden Antennenanordnungen A angeordnet ist. Dabei kann bei der Anordnung gemäß Figur 6 von dem Reader R aus jeweils die vom Durchgangsbereich D links liegende Antennenanordnung und.anschließend die rechts davon liegende Antennenanordnung angesteuert und betrieben werden, die dann jeweils abwechselnd links- und rechtszirkular betrieben werden.

Ferner ist darauf zu achten, dass die Übergänge vom Antennen-Netzwerk N, also von der Antennenanordnung 1 auf die Koaxialkabel 11' und von den Kabeln 11' auf den Reader R reflexionsfrei bzw. äußerst reflexionsarm gestaltet sind.

Die beschriebende Antennenanordnung 1 und der Betrieb einschließlich des Readers R eignen sich für unterschiedliche Frequenzbereiche. Besonders geeignet und bestimmt ist der Antennenaufbau und die Verwendung eines entsprechenden Readers für den UHF-Bereich, also ein Frequenzbereich von 800 MHz bis 1 GHz insbesondere für den 865 MHz bis 868 MHz-Bereich oder den 902 MHz bis 928 MHz-Bereich.

Ziel bei derartigen UHF-RFID-Systemen ist die Erzielung einer möglichst hohen Leserate (Tagerkennung) bei unterschiedlichster Umgebung und Tag-Anordnung, wobei die Mehrzahl der verfügbaren Tags in der Regel überwiegend lineare Polarisation besitzen.

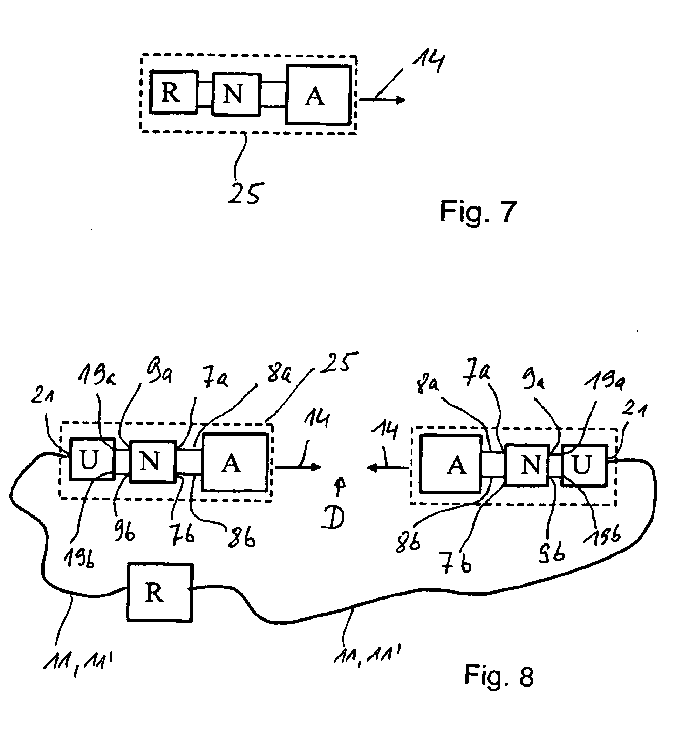

Anhand von Figur 7 ist nur gezeigt, dass beispielsweise abweichend zu Figur 6 der Reader R zusammen mit der Patch-Antenne A, also mit der einen Patch-Antenne 1 und dem Speisenetzwerk N in einem Gehäuse 25 integriert sein kann. Auch hierüber kann abwechselnd eine links und eine rechts zirkular polarisierte elektromagnetische Welle erzeugt werden.

Anhand von Figur 8 ist ein abweichendes Ausführungsbeispiel gegenüber Figur 5 und 6 insoweit gezeigt, als hier dem eigentlichen Netzwerk noch ein weiteres Umschalt-Netzwerk U vorgeschaltet ist. Ferner wird jede der Antennenanordnungen A mit dem Netzwerk N und dem vorgeschalteten Umschalt-Netzwerk U über nur eine Leitung 11, insbesondere nur eine Koaxialleitung 11', angesteuert und gespeist. Dieses vorgeschaltete Umschalt-Netzwerk U besitzt also nur einen readerseitigen Anschluss-Port 21 und nur eine Verbindung, bevorzugterweise in Form eines Koaxialkabels 11', wobei über dieses Kabel 11' nicht nur das entsprechende Speisesignal sondern beispielsweise auch eine dem Nutzsignal überlagerte Zwischenfrequenz oder eine Gleichspannung als weiteres Signal zugeführt wird, welches dem Umschalt-Netzwerk ermöglicht, eine entsprechende Durchschaltung von seinem Eingang 21 auf einen der beiden Ausgänge 19a bzw. 19b und somit über die in Figur 8 gezeigten beiden Verbindungsleitungen 29a bzw 29b zum nach geschalteten Netzwerk N herzustellen. Dadurch würde dem Netzwerk N, wie bei dem Ausführungsbeispiel nach Figur 5 und 6, ein entsprechendes Speisesignal nur dem einen Port 9a oder dem andern Port 9b zugeführt werden, wohingegen der jeweils andere Port 9b bzw 9a entsprechend reflexionsarm oder reflexionsfrei vom Netzwerk N aus betrachtet im Umschalt-Netzwerk U abgeschlossen wird, um dadurch, wie beschrieben, die rechts- oder linkszirkulierte Polarisation zu erzeugen. Bei einer derartigen Ausführung mit Umschaltnetzwerk U werden keine Anforderungen bezüglich der Impedanz der nicht aktiven Readerausgänge gestellt.

Im gezeigten Ausführungsbeispiel ist auch das Umschalt-Netzwerk in dem gemeinsamen Gehäuse 25 untergebracht, wobei im gezeigten Ausführungsbeispiel der Reader davon getrennt vorgesehen ist, aber nicht getrennt sein muss. Das Umschalt-Netzwerk könnte auch außerhalb des Gehäuses 25 von dem eigentlichen Netzwerk N und der Patch-Antenne 1 getrennt vorgesehen sein.

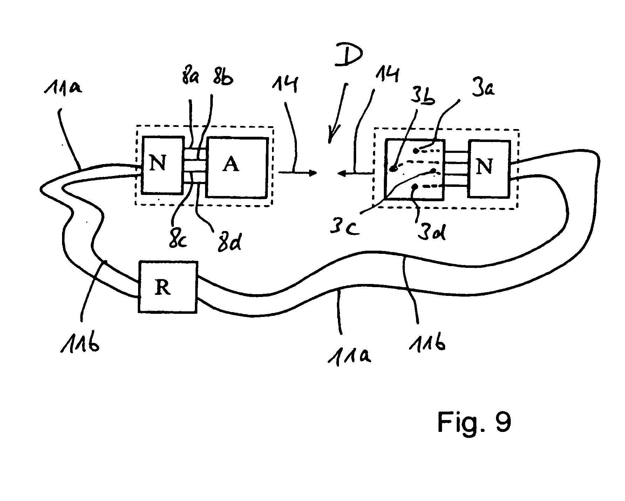

In Figur 9 ist nunmehr noch ein abschließendes Ausführungsbeispiel gezeigt, bei welchem eine Antenne, beispielsweise eine Patch-Antenne mit vier Speisepunkten verwendet wird. In diesem Fall hat das Netzwerk N vier antennenseitige Ports 9a, 9b, 9c und 9d. Die Einspeisung erfolgt dabei an jedem einzelnen Speisepunkt mit ca. 25% der Sendeleistung.

Bezug nehmend auf alle Ausführungsbeispiele soll ferner angemerkt werden, dass generell alle Antennen verwendet werden können, die über mindestens zwei Speisepunkte verfügen, so dass beide zirkulare Polarisationen (rechts- und linksdrehend) erzielt werden können. Somit kommen also erfindungsgemäß für die Antennen beispielsweise Patch-Antennen, Kreuzdipole, Schlitzantennen, Loopantennen etc. in Betracht.

Ferner wird angemerkt, dass die Antenne nicht nur links- und rechtszirkular polarisierend arbeiten oder betrieben werden soll, sondern dass die Antenne allgemein eine entsprechende links- oder rechtsdrehende elliptische Polarisation erzeugen sollte.

Zirkulare Polarisationen stellen insoweit nur einen Sonderfall der elliptischen Polarisation dar.

## Patentansprüche

1. Verfahren zur Ansteuerung einer RFID-Antenne mit folgenden Merkmalen
- es wird eine Antenne (A) und ein Antennen-Netzwerk (N) verwendet, wobei mittels eines anschließbaren Readers (R) über das Antennen-Netzwerk (N) die Antenne (A) betrieben wird,
- die Antenne (A) wird als zirkular oder elliptisch polarisierte Antenne (A) so betrieben, dass sie wechselweise linksdrehend und rechtsdrehend polarisiert wird;
- es wird ein Antennen-Netzwerk (N) mit zwei readerseitigen Ports (9a, 9b) verwendet, wobei der eine readerseitige Port (9a oder 9b) über eine Leitung (11, 11') mit dem Reader verbunden und der andere readerseitige Port (9b oder 9a) reflektionsarm oder vorzugsweise reflektionsfrei vom Antennennetzwerk (N) aus betrachtet abgeschlossen ist,
**gekennzeichnet durch** die folgenden weiteren Merkmale:
- als Antennen-Netzwerk (N) wird ein n/2-Hybrid verwendet,
- ein vom anschließbaren Reader (R) kommendes Sende- und Nutzsignal wird wechselweise einmal an dem einen readerseitigen Port (9a bzw. 9b) und dann an dem anderen readerseitigen Port (9b bzw. 9a) des Antennen-Netzwerks (N) zur wechselweisen Erzeugung einer linksdrehenden und einer rechtsdrehenden Polarisation eingespeist, und
- der jeweils dazu inaktive readerseitige Port (9b bzw. 9a) wird wechselweise reflektionsarm und vorzugsweise reflektionsfrei vom Antennen-Netzwerk (N) aus betrachtet abgeschlossen.

2. Verfahren nach Anspruch 1, **dadurch gekennzeichnet, dass** das Antennen-Netzwerk (N) und dessen zugehörigen beiden readerseitigen Ports (9a, 9b) getrennt über zwei Leitungen (11, 11') vom Reader (R) kommend angesteuert werden, wobei die vom Reader (R) kommenden Sende- und Nutzsignale wechselweise einmal auf dem einen readerseitigen Port (9a) und dann auf dem anderen readerseitigen Port (9b) eingespeist werden, worüber wechselweise eine linksdrehende und dann eine rechtsdrehende zirkular polarisierte elektromagnetische Welle an der Antenne (A) erzeugt werden, wobei der jeweils andere readerseitige Port (9b bzw. 9a) im Reader (R) reflektionsarm und vorzugsweise reflektionsfrei vom Netzwerk (N) aus betrachtet abgeschlossen wird.

3. Verfahren nach Anspruch 1, **dadurch gekennzeichnet, dass** ferner ein Umschaltnetzwerk (U) verwendet wird, welches dem Antennen-Netzwerk (N) vorgeschaltet wird, wobei das Umschalt-Netzwerk (U) über eine Leitung (11, 11') vom Reader (R) so angesteuert wird, dass ein vom Reader (R) kommendes Sende- und Nutzsignal wechselweise einmal über den einen Ausgang (19a) des Umschaltnetzwerks (U) dem einen readerseitigen Port (9a) und dann über den anderen Ausgang (19b) des Umschaltnetzwerks (U) dem anderen readerseitigen Port (9b) des Antennen-Netzwerks (N) zugeführt wird, wobei der jeweils nicht durchgeschaltete readerseitige Port (9b bzw. 9a) vorzugsweise im Umschalt-Netzwerk (U) reflektionsarm oder reflektionsfrei vom Netzwerk (N) aus betrachtet abgeschlossen wird.

4. Verfahren nach Anspruch 3, **dadurch gekennzeichnet, dass** dem readergesteuerten Umschalt-Netzwerk (U) über seinen readerseitigen Port (21) neben einem Sende- und Nutzsignal ein Signal in Form einer überlagerten Zwischenfrequenz oder einer Gleichspannung zugeführt wird, in dessen Abhängigkeit eine unterschiedliche Signal-Einspeisung des Sende- und Nutzsignals an dem einen oder an dem anderen readerseitigen Port (9a, 9b) des nachgeschalteten Antennen-Netzwerks (N) erfolgt, wodurch die angeschlossene Antenne (A) abhängig wechselweise linkshändig und rechtshändig zirkular polarisiert strahlt.

5. Verfahren nach einem der Ansprüche 1 bis 4, **dadurch gekennzeichnet, dass** die aufeinander folgenden linksdrehenden und rechtsdrehenden Polarisationszustände unmittelbar aufeinander folgend oder vorzugsweise in einem vorwählbaren zeitlichen Abstand zueinander abwechselnd erzeugt werden.

6. Verfahren nach einem der Ansprüche 1 bis 5, **dadurch gekennzeichnet, dass** eine Patch-Antenne (A') verwendet wird, deren Einspeisestellen (3; 3a, 3b, 3c, 3d) wechselweise so angesteuert werden, dass linksdrehende und rechtsdrehende Polarisationen abwechselnd an der Patch-Antenne (A') erzeugt werden.

7. Verfahren nach Anspruch 6, **dadurch gekennzeichnet, dass** eine Patch-Antenne (A') mit zwei Einspeisepunkten (3; 3a, 3b) verwendet wird, bei denen vorzugsweise jeweils ca. 50% der Sendeleistung eingespeist wird.

8. Verfahren nach Anspruch 6, **dadurch gekennzeichnet, dass** eine Patch-Antenne (A') mit vier Einspeisepunkten (3; 3a, 3b, 3c, 3d) verwendet wird, an denen vorzugsweise jeweils ca. 25% der Sendeleistung eingespeist wird.

9. Verfahren nach einem der Ansprüche 1 bis 8, **dadurch gekennzeichnet, dass** die Antenne (A) als RFID-Antenne (A) in einem UHF-Frequenzbereich betrieben wird, insbesondere im Frequenzbereich von 800 MHz bis 1 GHz, insbesondere von 865 MHz bis 868 MHz oder insbesondere von 902 MHz bis 928 MHz.

10. RFID-Antennen-System mit folgenden Merkmalen
- mit einer zirkular polarisierten Antenne (A)
- mit einem Antennen-Netzwerk (N) zur Ansteuerung und/oder Betrieb der Antenne (A),
- das Antennen-Netzwerk (N) umfasst zumindest zwei antennenseitige Ports (7a, 7b, 7c, 7d) zur Speisung der Antenne (A), wobei mittels der Antenne (A) eine linksdrehende oder eine rechtsdrehende Polarisation erzeugbar ist,
- das Antennen-Netzwerk (N) weist zwei readerseitige Ports (9a, 9b) auf, wobei ein Port (9a oder 9b) über eine Leitung (11, 11') mit einem Reader (R) verbindbar oder verbunden ist und der jeweils zweite Port (9b oder 9a) reflexionsarm oder reflexionsfrei abgeschlossen ist,
**gekennzeichnet durch** die folgenden weiteren Merkmale:
- das Antennen-Netzwerk (N) besteht aus einem n/2-Hybrid,
- das Antennen-Netzwerk (N) ist so aufgebaut, dass ein vom anschließbaren Reader (R) kommendes Sende- und Nutzsignal wechselweise einmal an dem einen readerseitigen Port (9a, 9b) und dann am anderen readerseitigen Port (9a, 9b) des Antennen-Netzwerkes (N) zur wechselweisen Erzeugung einer linksdrehenden und einer rechtsdrehenden Polarisation einspeisbar ist, und
- das Antennen-Netzwerk (N) ist so aufgebaut, dass der dazu jeweils inaktive readerseitige Port (9b bzw. 9a) wechselweise reflektionsarm und vorzugsweise reflektionsfrei vom Antennen-Netzwerk (N) aus betrachtet abgeschlossen ist.

11. RFID-Antennen-System nach Anspruch 10, **dadurch gekennzeichnet, dass** das Antennen-Netzwerk (N) und dessen zugehörigen beiden readerseitigen Ports (9a, 9b) getrennt über zwei Leitungen (11, 11') vom Reader (R) kommend ansteuerbar sind, wobei die vom Reader (R) kommenden Sende- und Nutzsignale wechselweise einmal auf dem einen readerseitigen Port (9a) und dann auf dem anderen readerseitigen Port (9b) einspeisbar sind, worüber wechselweise eine linksdrehende und dann eine rechtsdrehende zirkular polarisierte elektromagnetische Welle an der Antenne (A) erzeugbar ist.

12. RFID-Antennen-System nach Anspruch 10, **dadurch gekennzeichnet, dass** ferner ein Umschaltnetzwerk (U) vorgesehen ist, welches dem Antennen-Netzwerk (N) vorgeschaltet ist, wobei das Umschalt-Netzwerk (U) über eine Leitung (11, 11') vom Reader (R) so ansteuerbar ist, dass ein vom Reader (R) kommendes Sende- und Nutzsignal wechselweise einmal über den einen Ausgang (19a) des Umschaltnetzwerks (U) in den einen readerseitigen Port (9a) und dann über den anderen Ausgang (19b) des Umschaltnetzwerks (U) in den anderen readerseitigen Port (9b) des Antennen-Netzwerks (N) eingespeist wird, wobei der jeweils nicht durchgeschaltete readerseitige Port (9b bzw. 9a) vorzugsweise im Umschalt-Netzwerk (U) reflektionsarm oder reflektionsfrei vom Netzwerk (N) aus betrachtet abgeschlossen wird.

13. RFID-Antennen-System nach Anspruch 12, **dadurch gekennzeichnet, dass** dem readergesteuerten Umschalt-Netzwerk (U) über seinen einen readerseitigen Port (21) neben einem Sende- und Nutzsignal ein Signal in Form einer überlagerten Zwischenfrequenz oder einer Gleichspannung zuführbar ist, in dessen Abhängigkeit eine unterschiedliche Signal-Einspeisung des Sende- und Nutzsignals an dem einen oder an dem anderen readerseitigen Port (9a, 9b) des nachgeschalteten Antennennetzwerks (N) durchführbar ist, in dessen Abhängigkeit wiederum die angeschlossene Antenne (A) als linksdrehend polarisierte oder rechtsdrehend polarisierte Antenne (A) betreibbar ist.

14. RFID-Antenne-System nach einem der Ansprüche 10 bis 13, **dadurch gekennzeichnet, dass** vorzugsweise readergesteuert über das Antennen-Netzwerk (N) die Antenne (A) so ansteuerbar ist, dass unmittelbar aufeinander folgend oder in einem vorwählbaren zeitlichen Abstand zueinander wechselweise linkszirkulare und rechtszirkulare Polarisationen erzeugbar sind.

15. RFID-Antenne-System nach einem der Ansprüche 10 bis 14, **dadurch gekennzeichnet, dass** die Antenne (A) aus einer Antenne (A) besteht oder diese umfasst, die zumindest über zwei Speisepunkte (3; 3a, 3b) verfügt, wobei die Antenne (A) vorzugsweise aus einer Patch-Antenne (A'), einem Kreuzdipol, einer Schlitzantenne oder einer Loopantenne besteht.

16. RFID-Antennen-System nach Anspruch 15, **dadurch gekennzeichnet, dass** die Antenne (A) zwei Einspeisepunkte (3; 3a, 3b) aufweist, an denen jeweils zumindest näherunsweise 50% der Sendeleistung einspeisbar ist.

17. RFID-Antennen-System nach Anspruch 15, **dadurch gekennzeichnet, dass** die Antenne (A) vier Einspeisepunkten (3; 3a, 3b, 3c, 3d) umfasst, an denen vorzugsweise jeweils ca. 25% der Sendeenergie einspeisbar ist.

18. RFID-Antennen-System nach einem der Ansprüche 10 bis 17, **dadurch gekennzeichnet, dass** die Antenne (A) als RFID-Antenne (A) für einen Betrieb im UHF-Frequenzbereich, insbesondere im Frequenzbereich von 800 MHz bis 1 GHz, insbesondere von 865 MHz bis 868 MHz oder von 902 MHz bis 928 MHz vorgesehen wird.

## Claims

1. Method for activating an RFID antenna having the following features:
- an antenna (A) and an antenna network (N) are used, wherein the antenna (A) is operated via the antenna network (N) by means of a connectable reader (R),
- the antenna (A) is operated as a circular or elliptical polarized antenna (A) in such a way that it is alternately left-handed and right-handed polarized;
- an antenna network (N) comprising two reader-side ports (9a, 9b) is used, one reader-side port (9a or 9b) being connected to the reader via a line (11, 11') and the other reader-side port (9b or 9a) being closed with little reflection and preferably no reflection when viewed from the antenna network (N),
**characterized by** the following further features:
- a π/2 hybrid network is used as an antenna network,
- a transmitted and useful signal coming from the connectable reader (R) is alternately fed first to one reader-side port (9a or 9b) and then to the other reader-side port (9b or 9a) of the antenna network (N) so as to alternately produce left-handed and right-handed polarization,
- and the respective inactive reader-side port (9b or 9a) is alternately closed with little reflection and preferably no reflection when viewed from the antenna network (N).

2. Method according to claim 1, **characterized in that** the antenna network (N) and the two reader-side ports (9a, 9b) associated therewith are separately activated by two lines (11, 11') coming from the reader (R), the transmitted and useful signals coming from the reader (R) being alternately fed first to one reader-side port (9a) and then to the other reader-side port (9b), via which a left-handed and then a right-handed circular polarized electromagnetic wave are produced alternately at the antenna (A), the other respective reader-side port (9b or 9a) being closed in the reader (R) with little reflection and preferably no reflection when viewed from the network (N).

3. Method according to claim 1, **characterized in that** a switching network (U) is also used which is connected upstream of the antenna network (N), the switching network (U) being activated by a line (11, 11') from the reader (R) in such a way that a transmitted and useful signal coming from the reader (R) is alternately fed first to one reader-side port (9a) via one output (19a) of the switching network (U) and then to the other reader-side port (9b) of the antenna network (N) via the other output (19b) of the switching network (U),the respective reader-side port (9b or 9a) which has not been connected through preferably being closed in the switching network (U) with little reflection or no reflection when viewed from the network (N).

4. Method according to claim 3, **characterized in that**, in addition to a transmitted and useful signal, a signal in the form of a superposed intermediate frequency or a d.c. voltage is fed to the reader-controlled switching network (U) via the reader-side port (21) thereof, as a function of which signal the transmitted and useful signal is fed in a different manner to one of the reader-side ports (9a, 9b) of the antenna network (N) arranged downstream, the connected antenna (A) emitting in an alternately left-handed and right-handed circular polarized manner as a function thereof.

5. Method according to any one of claims 1 to 4, **characterized in that** the successive left-handed and right-handed polarization states follow one another directly or are preferably produced alternately at a pre-determined time interval.

6. Method according to any one of claims 1 to 5, **characterized in that** a patch antenna (A') is used, of which feeding points (3; 3a, 3b, 3c, 3d) are activated alternately in such a way that left-handed and right-handed polarization are produced alternately at the patch antenna (A').

7. Method according to claim 6, **characterized in that** a patch antenna (A') comprising two feeding points (3; 3a, 3b) is used, approximately 50 % of the transmitting power preferably being fed to each of said points.

8. Method according to claim 6, **characterized in that** a patch antenna (A') having four feeding points (3; 3a, 3b, 3c, 3d) is used, approximately 25 % of the transmitting power preferably being fed to each of said points.

9. Method according to any one of claims 1 to 98 **characterized in that** the antenna (A) is used as an RFID antenna (A) in a UHF-frequency range, in particular in a frequency range of from 800 MHz to 1 GHz, in particular of from 865 MHz to 868 MHz or in particular from 902 MHz to 928 MHz.

10. RFID antenna system having the following features:
- a circular polarized antenna (A)
- an antenna network (N) for controlling and/or operating the antenna (A),
- the antenna network (N) comprises at least two antenna-side ports (7a, 7b, 7c, 7d) for feeding the antenna (A), left-handed or right-handed polarization being able to be produced by means of the antenna (A),
- the antenna network (N) comprises two reader-side ports (9a, 9b), one port (9a or 9b) being able to be connected or being connected via a line (11, 11') to a reader (R) and the respective second port (9b or 9a) being closed with little reflection or no reflection,
**characterized by** the following further features:
- the antenna network (N) consists of a π/2 hybrid network,
- the antenna network (N) is configured in such a way that a transmitted and useful signal coming from the connectable reader (R) can be alternately fed first to one reader-side port (9a, 9b) and then to the other reader-side port (9a, 9b) of the antenna network (N) so as to alternately produce left-handed and right-handed polarization, and
- the antenna network (N) is configured in such a way that the respective inactive reader-side port (9b or 9a) is alternately closed with little reflection and preferably no reflection when viewed from the antenna network (N).

11. RFID antenna system according to claim 10, **characterized in that** the antenna network (N) and the two reader-side ports (9a, 9b) associated therewith can be separately activated by two lines (11, 11') coming from the reader (R), the transmitted and useful signals coming from the reader (R) being alternately fed first to one reader-side port (9a) and then to the other reader-side port (9b), via which a left-handed and then a right-handed circular polarized electromagnetic wave can be produced alternately at the antenna (A).

12. RFID antenna system according to claim 10, **characterized in that** a switching network (U) is also provided which is connected upstream of the antenna network (N), the switching network (U) being able to be activated by a line from the reader (R) in such a way that a transmitted and useful signal coming from the reader (R) is alternately fed first to one reader-side port (9a) via one output (19a) of the switching network (U) and then to the other reader-side port (9b) of the antenna network (N) via the other output (19b) of the switching network (U), the respective reader-side port (9b or 9a) which has not been connected through preferably being closed in the switching network (U) with little reflection or no reflection when viewed from the network (N).

13. RFID antenna system according to claim 12, **characterized in that**, in addition to a transmitted and useful signal, a signal in the form of a superposed intermediate frequency or a d.c. voltage can be fed to the reader-controlled switching network (U) via the one reader-side port (21) thereof, as a function of which signal the transmitted and useful signal may be fed in a different manner to one of the reader-side ports (9a, 9b) of the antenna network (N) arranged downstream, as a function of which the connected antenna (A) can be in turn operated as a left-handed polarized or right-handed polarized antenna (A).

14. RFID antenna system according to any one of claims 10 to 13, **characterized in that** the antenna (A) can be activated via the antenna network (N) in a preferably reader-controlled manner in such a way that left-circular and right-circular polarization can be produced alternately so as to either follow one another directly or at a pre-determined time interval.

15. RFID antenna system according to any one of claims 10 to 14, **characterized in that** the antenna (A) consists of an antenna (A) or comprises an antenna which in turn comprises at least two feeding points (3; 3a, 3b) the antenna (A) preferably consisting of a patch antenna (A'), a turnstile aerial, a slot aerial or a loop antenna.

16. RFID antenna according to claim 15, **characterized in that** the antenna (A) comprises two feeding points (3; 3a, 3b), at least approximately 50 % of the transmitting power being able to be fed to each of said points.

17. RFID antenna according to claim 15, **characterized in that** the antenna (A) comprises four feeding points (3; 3a, 3b, 3c, 3d), approximately 25 % of the transmitting power preferably being able to be fed to each of said points.

18. RFID antenna system according to any one of claims 10 to 17, **characterized in that** the antenna (A) is provided as an RFID-antenna (A) for use within a UHF-frequency range, in particular within a frequency range of from 800 MHz to 1 GHz, in particular of from 865 MHz to 868 MHz or from 902 MHz to 928 MHz.

## Revendications

1. Procédé pour le pilotage d'une antenne RFID, comprenant les étapes suivantes :
- on utilise une antenne (A) et un réseau d'antennes (N), et l'antenne est amenée à fonctionner au moyen d'un lecteur (R) susceptible d'être raccordé via le réseau d'antennes (N),
- l'antenne (A) est amené à fonctionner, comme antenne à polarisation circulaire ou elliptique (A) de telle façon qu'elle est polarisée alternativement de manière lévogyre et dextrogyre,
- on utilise un réseau d'antennes (N) avec deux ports (9a, 9b) du côté lecteur, de sorte que l'un des ports (9a ou 9b) côté lecteur est relié au lecteur via une ligne (11, 11'), et l'autre port (9b ou 9a) côté lecteur est obturer de manière pauvre en réflexion ou de préférence de manière dépourvue de réflexion, considéré depuis le réseau d'antennes (N), **caractérisé par** les caractéristiques suivantes :
- on utilise comme réseau d'antennes un hybride n/2,
- un signal émis et utile provenant du lecteur (R) à raccorder est injecté alternativement une fois à l'un des ports (9a ou 9b) côté lecteur et ensuite à l'autre port (9b ou 9a) côté lecteur du réseau d'antennes (N) pour générer alternativement une polarisation lévogyre et une polarisation dextrogyre, et
- le port (9b ou 9a) côté lecteur respectivement inactif est alternativement obturé de manière pauvre en réflexion et de préférence dépourvue de réflexion, considéré depuis le réseau d'antennes (N).

2. Procédé selon la revendication 1, **caractérisé en ce que** le réseau d'antennes (N) et ses deux ports associés (9a, 9b) côté lecteur sont pilotés séparément via deux lignes (11, 11') provenant du lecteur (R), et les signaux émis et utiles provenant du lecteur (R) sont injectés alternativement une fois vers l'un des ports (9a) côté lecteur et ensuite vers l'autre port (9b) côté lecteur, de sorte que l'on engendre alternativement une onde électromagnétique à polarisation circulaire lévogyre et ensuite une onde électromagnétique à polarisation circulaire dextrogyre au niveau de l'antenne (A), et l'autre port respectif (9b ou 9a) côté lecteur est obturé dans le lecteur (R) de manière pauvre en réflexion ou de préférence de manière dépourvue de réflexion, considéré depuis le réseau (N).

3. Procédé selon la revendication 1, **caractérisé en ce que** l'on utilise en outre un réseau de commutation (U) qui est branché en amont du réseau d'antennes (N), et le réseau de commutation (U) est piloté via une ligne (11, 11') depuis le lecteur (R) de telle façon qu'un signal d'émission et utile provenant du lecteur (R) est admis alternativement via l'une des sorties (19a) du réseau de commutation (U) à l'un des ports (9a) côté lecteur et ensuite via l'autre sortie (19b) du réseau de communication (U) à l'autre des ports (9b) côté lecteur du réseau d'antennes (N), et l'autre port respectif (9b ou 9a) côté lecteur qui n'est pas rendu passant est obturé de préférence dans le réseau de commutation (U) de manière pauvre en réflexion ou de manière dépourvue de réflexion, considéré depuis le réseau (N).

4. Procédé selon la revendication 3, **caractérisé en ce qu'**on admet au réseau de commutation (U) commandé par un lecteur, via son port (21) côté lecteur, outre un signal d'émission utile, un signal sous la forme d'une fréquence intermédiaire superposée ou d'une tension continue, en dépendance duquel a lieu une injection différente du signal d'émission utile vers l'un ou vers l'autre des ports (9a, 9b) côté lecteur du réseau d'antennes (N) branché à la suite, et l'antenne (A) raccordée envoie un rayonnement à polarisation circulaire de manière dépendante alternativement lévogyre et dextrogyre.

5. Procédé selon l'une des revendications 1 à 4, **caractérisé en ce que** les états de polarisation lévogyre et dextrogyre mutuellement successifs sont générés de manière à se succéder mutuellement directement, ou alternativement l'un par rapport à l'autre, de préférence avec un écartement temporel susceptible d'être choisi.

6. Procédé selon l'une des revendications 1 à 5, **caractérisé en ce que** l'on utilise une antenne dite "patch" (A'), dont les points d'injection (3 ; 3a, 3b, 3c, 3d) sont pilotés alternativement de telle façon que l'on engendre en alternance des polarisations lévogyre et dextrogyre au niveau de l'antenne patch (A').

7. Procédé selon la revendication 6, **caractérisé en ce que** l'on utilise une antenne patch (A') avec deux points d'injection (3 ; 3a, 3b), auxquels on injecte de préférence respectivement environ 50 % de la puissance d'émission.

8. Procédé selon la revendication 6, **caractérisé en ce que** l'on utilise une antenne patch (A') avec quatre points d'injection (3 ; 3a, 3b, 3c, 3d), auxquels on injecte de préférence respectivement environ 25 % de la puissance d'émission.

9. Procédé selon l'une des revendications 1 à 8, **caractérisé en ce que** l'antenne (A) est amenée à fonctionner comme antenne RFID (A) dans une plage de fréquences UHF, en particulier dans la plage de fréquences de 800 MHz à 1 GHz, en particulier de 865 MHz à 868 MHz, ou en particulier de 902 MHz à 928 MHz.

10. Système à antenne RFID comprenant les éléments suivants :
- il comprend une antenne à polarisation circulaire (A),
- il comprend un réseau d'antennes (N) pour le pilotage et/ou le fonctionnement de l'antenne (A),
- le réseau d'antennes (N) comprend au moins deux ports (7a, 7b, 7c, 7b) côté antenne pour l'alimentation de l'antenne (A), de sorte qu'une polarisation lévogyre ou une polarisation dextrogyre peut être engendrée au moyen de l'antenne (A),
- le réseau d'antennes (N) comprend deux ports (9a, 9b) côté lecteur, de sorte qu'un port (9a 9b) est relié ou susceptible d'être relié via une ligne (11, 11') avec un lecteur (R), et que le second port respectif (9b 9a) est raccordé de manière pauvre en réflexion ou de manière dépourvue de réflexion,
**caractérisé par** les caractéristiques suivantes :
- le réseau d'antennes (N) est un hybride n/2,
- le réseau d'antennes (N) est structuré de telle façon qu'un signal d'émission utile provenant du lecteur (R) à raccorder est susceptible d'être injecté alternativement une fois à l'un des ports (9a, 9b) côté lecteur et ensuite à l'autre port (9a, 9b) côté lecteur du réseau d'antennes (N) pour engendrer alternativement une polarisation lévogyre et une polarisation dextrogyre, et
- le réseau d'antennes (N) est structuré de telle façon que le port (9b ou 9a) côté lecteur respectivement inactif est obturé alternativement de manière pauvre en réflexion et de préférence de manière dépourvue de réflexion, considéré depuis le réseau d'antennes (N).

11. Système à antenne RFID selon la revendication 10, **caractérisé en ce que** le réseau d'antennes (N) et ses deux ports associés (9a, 9b) côté lecteur sont susceptibles d'être pilotés séparément via deux lignes (11, 11') provenant du lecteur (R), de sorte que les signaux d'émission utiles provenant du lecteur (R) peuvent être injectés alternativement une fois à l'un des ports (9a) côté lecteur et ensuite à l'autre port (9b) côté lecteur, grâce à quoi une onde électromagnétique à polarisation circulaire lévogyre et ensuite une onde électromagnétique à polarisation circulaire dextrogyre peuvent être engendrées au niveau de l'antenne (A).

12. Système à antenne RFID selon la revendication 10, **caractérisé en ce qu'**il est en outre prévu un réseau de commutation (U), branché en amont du réseau d'antennes (N), de sorte que le réseau de commutation (U) est susceptible d'être piloté par le lecteur (R) via une ligne (11, 11') de telle façon qu'un signal d'émission utile provenant du lecteur (R) est injecté alternativement une fois via l'une des sorties (19a) du réseau de commutation (U) à l'un des ports (9a) côté lecteur, et ensuite via l'autre sortie (19b) du réseau de commutation (U) à l'autre port (9b) côté lecteur du réseau d'antennes (N), et le port respectif côté antenne (9b ou 9a) qui n'est pas rendu passant est obturé de préférence dans le réseau de commutation (U) de manière pauvre en réflexion ou de manière dépourvue de réflexion, considéré depuis le réseau (N).

13. Système à antenne RFID selon la revendication 12, **caractérisé en ce qu'**un signal sous la forme d'une fréquence intermédiaire ou d'une tension continue superposée est susceptible d'être admis au réseau de commutation (U) commandé par un lecteur via son port (21) côté lecteur, en plus d'un signal d'émission et utile, en fonction duquel une injection différente du signal émis et utile est susceptible d'être exécutée vers l'un ou l'autre des ports (9a, 9b) côté lecteur du réseau d'antennes (N) branché en aval, en fonction duquel l'antenne raccordée est susceptible d'être amenée à fonctionner à son tour comme une antenne polarisée lévogyre ou une antenne polarisée dextrogyre (A).

14. Système à antenne RFID selon l'une des revendications 10 à 13, **caractérisé en ce que** l'antenne (A) est susceptible d'être pilotée, de préférence sous la commande d'un lecteur via le réseau d'antennes (N), de telle façon qu'il est possible d'engendrer des polarisations circulaires lévogyre et dextrogyre soit immédiatement successives soit alternativement à un écartement temporel prédéterminé.

15. Système à antenne RFID selon l'une des revendications 10 à 14, **caractérisé en ce que** l'antenne (A) est constitué par une antenne (A) ou comprend une telle antenne qui dispose d'au moins deux points d'alimentation (3 ; 3a, 3b), l'antenne (A) étant de préférence une antenne patch (A'), un dipôle en croix, une antenne à fente ou une antenne en boucle.

16. Système à antenne RFID selon la revendication 15, **caractérisé en ce que** l'antenne (A) comprend deux points d'injection (3 ; 3a, 3b), au niveau desquels il est possible d'injecter respectivement au moins approximativement 50 % de la puissance émise.

17. Système à antenne RFID selon la revendication 15, **caractérisé en ce que** l'antenne (A) comprend quatre points d'injection (3 ; 3a, 3b, 3c, 3d), au niveau desquels il est possible d'injecter respectivement de préférence environ 25 % de l'énergie émise.

18. Système à antenne RFID selon l'une des revendications 10 à 17, **caractérisé en ce que** l'antenne (A) est prévue comme antenne RFID (A) pour un fonctionnement dans la plage de fréquences UHF, en particulier dans la plage de fréquences de 800 MHz à 1 GHz, en particulier de 865 MHz à 868 MHz ou de 902 MHz à 928 MHz.
